Europäisches Patentamt

European Patent Office

Office européen des brevets

(11) Veröffentlichungsnummer: **0 290 654 B1**

# EUROPÄISCHE PATENTSCHRIFT

(45) Veröffentlichungstag der Patentschrift: **15.05.91**

(51) Int. Cl.⁵: **F16B 13/08**

(21) Anmeldenummer: **87106995.1**

(22) Anmeldetag: **14.05.87**

(54) Spreizdübel zur formschlüssigen Verankerung in einem Bohrloch.

(43) Veröffentlichungstag der Anmeldung:
**17.11.88 Patentblatt 88/46**

(45) Bekanntmachung des Hinweises auf die
Patenterteilung:
**15.05.91 Patentblatt 91/20**

(84) Benannte Vertragsstaaten:
**AT BE CH DE ES FR GB GR IT LI LU NL SE**

(56) Entgegenhaltungen:
| | |
|---|---|
| DE-A- 2 016 272 | DE-A- 3 115 040 |
| DE-A- 3 134 876 | DE-A- 3 511 784 |
| DE-C- 157 485 | DE-U- 1 772 225 |
| LU-A- 32 039 | US-A- 1 476 835 |
| US-A- 2 370 327 | US-A- 4 135 432 |

(73) Patentinhaber: **Mächtle GmbH**
**Jahnstrasse 4**
**W-7015 Korntal-Münchingen(DE)**

(72) Erfinder: **Mächtle, Daniel**
**Waldstrasse 16**
**W-7015 Korntal(DE)**
Erfinder: **Valenta, Günter**
**Greutterstrasse 54**
**W-7000 Stuttgart 31(DE)**

(74) Vertreter: **Raeck, Wilfrid, Dipl.-Ing.**
**Moserstrasse 8**
**W-7000 Stuttgart 1(DE)**

## Beschreibung

Die Erfindung betrifft einen Spreizdübel zur formschlüssigen Verankerung in einem Bohrloch einer Stein- oder Betonwand, das einen radial erweiterten Hinterschnittbereich enthält, bestehend aus einer Spreizhülse mit einem durch Längsschlitze voneinander getrennte Spreizlamellen aufweisenden und im Bereich des vorderen Endes im allgemeinen radial aufweitbaren Abschnitt und aus einem in die Spreizhülse eintreibbaren Spreizkörper zum Aufweiten des aufweitbaren Abschnittes.

Ein derartiger Spreizdübel ist beispielsweise aus der DE-A-3 134 876 bekannt.

Wenn bei einem Hinterschnittdübel durch Eintreiben des Spreizkörpers mit Hilfe eines Setzbolzens oder eines anderen Werkzeuges die Spreizhulse an ihrem einen Ende aufgeweitet wird, besteht die Gefahr, daß ihre einzelnen Lamellen oder Segmente dabei unterschiedlich stark verbogen werden. Dies hat seine Ursache darin, daß inhomogenes Stein-oder sonstiges Wandmaterial unterschiedliche Härten bzw. Festigkeitswerte aufweist und folglich dem Spreizvorgang über den Umfang des Bohrloches unterschiedliche Widerstandswerte entgegensetzt. Solche Verhältnisse führen zu einer von der Längsachse der Wandbohrung abweichenden unsachgerechten Verankerung und treten vorwiegend beim Setzen von Hinterschnittdübeln ein, weil die Spreizhülse an ihrem aufweitbaren Ende besonders weit gespreizt werden muß, damit die Lamellen mit ihrem aufweitbaren Abschnitt in den radial erweiterten Hinterschnittbereich der Bohrung eindringen und dadurch die erwünschte formschlüssige Verankerung des Dübels gewährleisten können.

Der Erfindung liegt die Aufgabe zugrunde, bei einem Spreizdübel der eingangs bezeichneten Art Maßnahmen zu treffen, mit denen beim Spreizvorgang von der Spreizhülse ein über den Umfang im allgemeinen gleichmäßig verteilter Spreizdruck der Wandbohrung erzeugt und vermieden wird, daß die Stirnflächen und/oder Kanten der aufgeweiteten Lamellen des Dübels das Mauerwerk zu stark verdichten und sich dort je nach unterschiedlicher Festigkeit des Wandmaterials eingraben, wodurch sonst der beabsichtigte, für die Verankerung optimale Richtungsverlauf und die Haltekraft des Dübels beeinträchtigt würden.

Erfindungsgemäß wird diese Aufgabe dadurch gelöst, daß auf dem Umfang des aufweitbaren Abschnittes der Spreizhülse Abdeckschalen vorgesehen sind, die im Bereich ihres dem aufweitbaren Abschnitt entgegengesetzten Endes beweglich miteinander in Verbindung stehen und jeweils über einem Längsschlitz der Spreizhülse zwischen den Spreizlamellen angeordnet sowie von einer solchen Breite sind, daß der Längsschlitz auch nach dem Aufweiten noch im wesentlichen über seine gesamte Breite abgedeckt ist.

Mit der vorgeschlagenen Bauweise wird vermieden, daß sich die Kanten oder Stirnflächen der aufgeweiteten Lamellen eines Dübels insbesondere einseitig an einer Umfangsseite des Bohrloches stärker eingraben und so keine sachgerechte symmetrische Verankerung zulassen. Die von den Lamellen oder Spreizsegmenten bei der Krafteinleitung in das Mauerwerk wirksame Flächenpressung bleibt zwar theoretisch in mehr oder weniger aufgeweitetem Zustand der Lamellen die gleiche; jedoch muß berücksichtigt werden, daß nach dem Aufweiten einzelne, weit voneinander entfernte Lamellenabschnitte am Mauerwerk anliegen, die sich dort als aufgeteilte Flächen schon deshalb leichter eingraben, weil dabei auch deren Flächenkanten schneidend mitwirken.

Mit Hilfe der vorgeschlagenen Abdeckschalen wird das bestehende Problem überraschend einfach vollständig beseitigt; denn die für das Eingraben in das Mauerwerk maßgeblichen Kanten und Lamellen der vorstehenden Segmente kommen aufgrund der Abdeckschalen nicht mehr zur Wirkung. Die Abdeckschalen üben außerdem die Wirkung aus, eventuell gebildetes zermahlenes Mauerwerk zusammenzuhalten und zu verhindern, daß solches Mahlklein durch die Längsschlitze bzw. durch die aufgeweiteten Zwischenräume zwischen den Lamellen entweicht, wodurch Ausweichraum für durch weiteres Eingraben verdrängtes Mahlklein entstehen würde.

Zweckmäßigerweise sind die Abdeckschalen der Krümmung der Spreizhülse ungefähr angepaßt und in einer gegenüber dem Hülsenumfang radial vertieften Ausnehmung angeordnet, so daß sie in nicht aufgeweitetem Zustand innerhalb des lichten Außendurchmessers des Spreizdübels verbleiben, der sich folglich ohne Schwierigkeiten in die mit dem erforderlichen geringfügigen Übermaß vorbereitete Wandbohrung einführen läßt.

Gemäß einem vorteilhaften Merkmal ist vorgesehen, daß die Abdeckschalen durch jeweils mindestens einen an dem dem Bereich der Aufweitung abgewandten Ende mittig angebrachten, radial einwärts vorstehenden Vorsprung, der jeweils in einen Längsschlitz der Spreizhülse eingreift, bezüglich des jeweiligen Längsschlitzes ausgerichtet sind. Da der Vorsprung in einem Bereich des Längsschlitzes verbleibt, der auch nach dem Aufweiten des Dübels noch durch verhältnismäßig nahe beieinanderliegende Seitenwandungen begrenzt ist, bleibt die Abdeckschale so lange geführt, daß der Längsschlitz auch in aufgeweitetem Zustand überdeckt wird.

Der Spreizdübel nach Anspruch 1 ist auch dadurch weitergebildet, daß jede Abdeckschale am aufweitbaren Ende der Spreizhülse mindestens einen etwa radial nach außen abgebogenen Abschnitt aufweist, der den Längsschlitz an einem an die Spreizhülse anschließenden Bereich der Lamellen gegenüber dem Mauerwerk geschlossen hält. Vor allem bei einem Dübel mit radial verlaufender Hinterschnittschulter sorgt der abgebogene, gegebenenfalls unabhängige Abschnitt dafür, daß die Hinterschnittschulter praktisch wie eine zusammenhängende Fläche am Hinterschnitt im Bohrloch anliegt und damit bei hoher Verankerungskraft die Flächenpressung niedrig gehalten wird.

Zweckmäßigerweise sind die Abdeckschalen seitlich aneinanderliegend auf dem Umfang der Spreizhülse angeordnet, wobei sie sowohl sich in Axialrichtung als auch ungefähr in Radialrichtung erstreckende zusammenhängende Abschnitte aufweisen. Die Abdeckschalen, falls sie nicht Einzelteile und rückwärtig durch einen Federring zusammengehalten sind, können auch aus Metallblech, insbesondere metallischen Stanzteilen, oder aus Kunststoff mit erhöhten Härte- bzw. Zähigkeitswerten bestehen. Ferner können die Abdeckschalen im Bereich des der Aufweitung abgewandten Endes durch einen Federring miteinander verbunden und am Umfang der Spreizlamellen anliegend gehalten sein. Weiterhin können die Abdeckschalen anstelle oder zusätzlich zu dem Federring an ihren der Aufweitung abgewandten Enden seitlich miteinander verbunden sein.

Bei einer bevorzugten Ausführungsform kann die sich über den Umfang der Spreizhülse zur Aufnahme der Abdeckschalen erstreckende Ausnehmung am rückwärtigen Ende durch eine Ringschulter der Spreizhülse gebildet sein, die einen im Durchmesser größeren zylindrischen Abschnitt der Spreizhülse von dem die Ausnehmung bildenden und nach vorn verjüngten aufweitbaren Abschnitt der Spreizhülse abteilt.

Einzelheiten eines Spreizdübels nach der Erfindung ergeben sich aus der nachfolgenden Beschreibung anhand von in den Zeichnungen dargestellten Ausführungsbeispielen. Es zeigen schematisch

Fig. 1    einen vergrößerten Teillängsschnitt durch eine Spreizhülse gemäß der Erfindung,

Fig. 2    einen Längsschnitt durch einen Spreizdübel mit Setzwerkzeug, wobei die Einzelteile rechts von der Mittellinie im gesetzten Zustand gekennzeichnet sind und

Fig. 3    eine schematische Ansicht einer entsprechend einer Abwicklung mehrerer Abdeckschalen gestanzten Blechplatine.

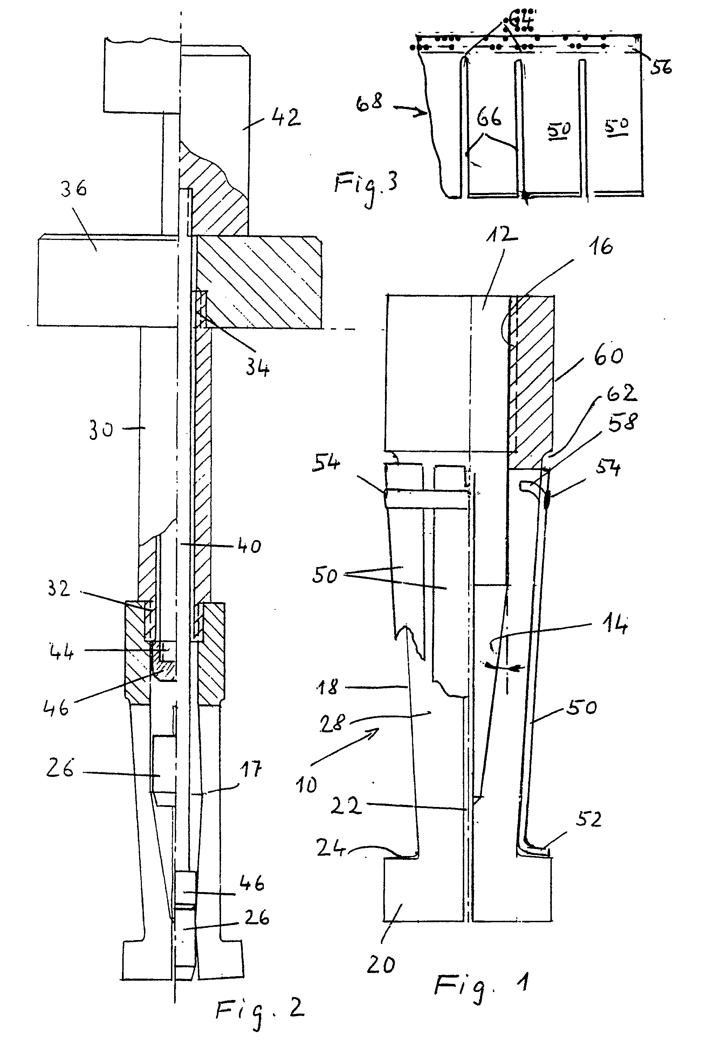

Gemäß Fig. 1 und 2 besteht die Spreizhülse 10 eines Hinter-schnittdübels aus einem einteiligen Metallkörper, der einen rückwärtigen zylindrischen Hülsenabschnitt 60 und einen daran anschließenden, sich nach vorn verjüngenden Hülsenabschnitt 18 umfaßt, wobei letzterer beim gezeigten Ausführungsbeispiel zwei- bis dreimal länger als der rückwärtige zylindrische Abschnitt 60 ist. Die Spreizhülse enthält eine zylindrische Bohrung 12, die ungefähr der halben Spreizhülsenlänge entspricht, sowie einen sich nach vorn anschließenden, sich mit einem Konuswinkel von ungefähr 7° verjüngenden Bohrungsabschnitt 14, der im Beispiel aus Fertigungsgründen nicht bis zum vorderen Ende der Spreizhülse reicht.

Ungefähr über die Länge des verjüngten Hülsenabschnittes 18 enthält die Spreizhülse Längsschlitze 22, durch die je nach Anzahl der Schlitze mindestens vier, gegebenenfalls auch mehr unter sich gleiche, biegbare Lamellen 28 entstehen, um die Spreizhülse aufzuweiten. Am vorderen Ende geht der verjüngte Hülsenabschnitt 18 in einen als Hinterschnittschulter 20 dienenden, verbreiterten zylindrischen Teil über, dessen Rückseite 24 an einer entsprechend radial verlaufenden Hinterschnittfläche in einer Wandbohrung zur Anlage kommt. Somit trägt jede Lamelle 28 an ihrem vorderen, in der Bohrung vorangehenden Ende eine in der Draufsicht segmentförmige Hinterschnittschulter 20.

Die Wandstärke der Lamellen 28 ergibt sich aus dem konisch verlaufenden Außenumfang des verjüngten Hülsenabschnittes 18 sowie aus dem Durchmesser der zylindrischen Bohrung 12 und dem Konuswinkel des sich daran anschließenden konischen Bohrungsabschnittes 14 und wird so bemessen, daß der verbleibende kleinste Querschnitt den vom Dübel geforderten Auszugswerten genügt. Man erkennt aus Fig. 1, daß die Lamellen 28 in der Nähe ihres rückwärtigen Endes etwa an der Stelle 17 den geringsten Querschnitt besitzen, so daß beim Spreizvorgang die Lamellen bevorzugt um diesen Bereich sich zu biegen beginnen.

Das rückwärtige Ende der zylindrischen Bohrung 12 der Spreizhülse enthält ein Innengewinde 16, in das gemäß Fig. 2 ein auf dem reduzierten vorderen Ende eines Führungsrohrs 30 angeordnetes Außengewinde 32 eingeschraubt ist. Das Führungsrohr 30 besitzt eine bestimmte Länge und ist an seinem rückwärtigen Gewindeabschnitt 34 mit einer Anschlagscheibe 36 verschraubt, die an der den Bohrungseingang enthaltenden Außenwand des Mauerwerks beim Setzen des Dübels zur Anlage gebracht wird, damit die Hinterschnittschultern an den Lamellen der Spreizhülse in die gleiche Tiefe wie der Hinterschnitt in der Wandbohrung gelangen.

Das Setzwerkzeug des Spreizdübels wird vervollständigt durch einen in das Führungsrohr eingeführten Setzbolzen 40, an dessen vorderen Ende 44 eine vorzugsweise auswechselbare Schlagkappe 46, z. B. mit Gewinde befestigt ist. Der Setzbolzen mit Schlagkappe wirken gegen einen zylindrischen Spreizkörper 26, der durch die zylindrische Bohrung l2 eingeführt wird und beim Vortreiben die Lamellen 28 nach außen biegt. Am rückwärtigen Ende trägt der Setzbolzen einen aufgeschraubten Setzbolzenkopf 42. Die Setzbolzenlänge ist so bemessen, daß beim Aufsitzen des Setzbolzenkopfes 42 auf der Rückseite der Anschlagscheibe 36 die Spreizhülse sich in ihrem vollständig aufgeweiteten Zustand befindet.

Dieser in Fig. 2 rechts von der Mittellinie dargestellte Zustand zeigt den Spreizkörper 26 am vorderen Ende der Spreizhülse l0, wo er durch den Reibungseingriff mit den Lamellen 28 eingeklemmt ist, zusätzlich am Boden der Bohrung anliegt oder mit einem möglichen, nicht-gezeigten vorderen Verlängerungsstift an einem weiter entfernt liegenden Bohrungsgrund gegen Herausfallen gesichert ist. Die Lamellen 28 sind so aufgeweitet, daß der ursprünglich konisch nach vorn verjüngte Verlauf bis zur Anlage an der Bohrungswand ungefähr zylindrisch und eventuell aufgeweitet wird. In diesem gesetzten aufgeweiteten Zustand des Spreizdübels wird das Führungsrohr 30 abgeschraubt, wozu der Monteur direkt an der z. B. mit einer Umfangsrändelung versehenen Anschlagscheibe 36 angreifen kann. In den gesetzten Dübel kann nunmehr zusammen mit dem an der Wand zu befestigenden Bauteil ein Verankerungsbolzen eingeschraubt und gegen die Wand verspannt werden.

Eine wirkungsvolle Verbesserung der formschlüssigen Verankerung von Hinterschnitt-Spreizdübeln wird erfindungsgemäß durch die in Fig. l teilweise abgebrochen, teilweise im Schnitt gezeigten Abdeckschalen 50 erzielt, die ungefähr der Länge der Lamellen entsprechen und vorzugsweise so breit sind, daß sie den jeweiligen Längsschlitz 22 auch in gespreiztem Zustand überdecken. Die Abdeckschalen 50 können in ihrer einfachsten Form gemäß Fig. l aus Blechstücken bestehen, die mit einem geraden Abschnitt zunächst an den Lamellen 28 anliegen und am vorderen Ende einen abgebogenen Abschnitt 52 tragen, der den Längsschlitz im Bereich der Hinterschnittschulter 24 überdeckt. Sie sind ungefähr der Krümmung der Spreizhülse angepaßt und in der gegenüber dem Umfang des zylindrischen Hülsenabschnittes 6 radial vertieften Ausnehmung so angeordnet, daß sie nicht über den lichten Außendurchmesser des Spreizdübels hinausragen.

Am rückwärtigen Ende ist jede Abdeckschale 50 mit einem ausgestanzten und abgebogenen Vorsprung 58 versehen, der in den Längsschlitz 22 der Spreizhülse eingreift und somit die Abdeckschale dem Längsschlitz gegenüber ausgerichtet hält. Bei Abdeckschalen aus geeignetem Kunststoff können die Vorsprünge 58 aus eingeformten oder eingeschraubten Stiften bestehen. Am rückwärtigen Ende sind die Abdeckschalen 50 durch einen Federring 54 zusammengehalten, der als Metall oder Kunststoffring in einer eingedrückten oder herausgearbeiteten Umfangsrille 54 aufgenommen ist, um die Abdeckschalen 50 als Gruppe zusammenzuhalten.

Fig. 3 zeigt ähnliche Abdeckschalen wie in Fig. l, die als zusammenhängender Stanzteil gefertigt sind, in den einzelne Abdeckschalen 50 durch ausgestanzte Schlitze 66 voneinander getrennt sind, aber über einen rückwärtigen Verbindungssteg 64 zusammenhängen. Auch in diesem Fall kann zusätzlich ein Federring wie zuvor vorgesehen sein, um die zur Hülsenform zusammengebogene Platine 68 an der Spreizhülse l0 anliegend zu halten.

Bezugszeichenliste

10 - Spreizhülse
12 - zylindrische Bohrung
14 - konisch verjüngter Bohrungsabschnitt
16 - Innengewinde
18 - verjüngter Hülsenabschnitt
20 - Hinterschnittschulter
22 - Längsschlitze
24 - Rückseite der Hinterschnittschulter
26 - Spreizkörper
28 - Lamellen
30 - Führungsrohr des Setzwerkzeuges
32 - vorderer Gewindeabschnitt am Führungsrohr
34 - rückwärtiger Gewindeabschnitt am Führungsrohr
36 - Anschlagscheibe
38
40 - Setzbolzen
42 - Setzbolzenkopf
44 - vorderes Setzbolzenende
46 - Schlagkappe für Setzbolzen
48
50 - Abdeckschalen
52 - abgebogener Ansatz
54 - Federring
56 - Ringrille
58 - Positionier-Vorsprung
60 - rückwärtiger zylindrischer Hülsenabschnitt
62 - Ringschulter
64 - Verbindungssteg
66 - Stanzschlitze
68 - Platine

Ansprüche

1. Spreizdübel zur formschlüssigen Verankerung in einem Bohrloch einer Stein- oder Betonwand, das einen radial erweiterten Hinterschnittbereich enthält, bestehend aus einer Spreizhülse mit einem durch Längsschlitze voneinander getrennte Spreizlamellen aufweisenden und im Bereich des vorderen Endes im allgemeinen radial aufweitbaren Abschnitt und aus einem in die Spreizhülse eintreibbaren Spreizkörper zum Aufweiten des aufweitbaren Abschnittes, **dadurch gekennzeichnet,** daß auf dem Umfang des aufweitbaren Abschnittes der Spreizhülse (10) Abdeckschalen (50) vorgesehen sind, die im Bereich ihres dem aufweitbaren Abschnitt entgegengesetzten Endes beweglich miteinander in Verbindung stehen und jeweils über einem Längsschlitz der Spreizhülse zwischen den Spreizlamellen angeordnet sowie von einer solchen Breite sind, daß der Längsschlitz auch nach dem Aufweiten noch im wesentlichen über seine gesamte Breite abgedeckt ist.

2. Spreizdübel nach Anspruch 1, dadurch gekennzeichnet, daß die Abdeckschalen (50) der Krümmung der Spreizhülse ungefähr angepaßt und in einer gegenüber dem Hülsenumfang radial so weit vertieften Ausnehmung angeordnet sind, daß sie in nicht aufgeweitetem Zustand innerhalb des lichten Außendurchmessers der Spreizhülse verbleiben.

3. Spreizdübel nach Anspruch 1 oder 2, dadurch gekennzeichnet, daß die Abdeckschalen (50) durch jeweils mindestens einen an dem dem Bereich der Aufweitung abgewandten Ende mittig angebrachten, radial einwärts vorstehenden Vorsprung (58), der jeweils in einen Längsschlitz der Spreizhülse eingreift, bezüglich des jeweiligen Längsschlitzes ausgerichtet sind.

4. Spreizdübel nach einem der vorhergehenden Ansprüche, dadurch gekennzeichnet, daß jede Abdeckschale (50) am aufweitbaren Ende der Spreizhülse mindestens einen etwa radial nach außen abgebogenen Ansatz (52) aufweist, der den Längs-schlitz (22) an einem an die Spreizhülse anschließenden Bereich der Lamellen gegenüber dem Mauerwerk geschlossen hält.

5. Spreizdübel nach einem der vorhergehenden Ansprüche, dadurch gekennzeichnet, daß die Abdeckschalen (50) seitlich aneinanderliegend auf dem Umfang der Spreizhülse angeordnet sind und sowohl sich in Axialrichtung als auch ungefähr in Radialrichtung erstreckende, insbesondere zusammenhängende Abschnitte aufweisen.

6. Spreizdübel nach einem der vorhergehenden Ansprüche, dadurch gekennzeichnet, daß die Abdeckschalen (50) aus Metallblech, insbesondere metallischen Stanzteilen, oder aus Kunststoff mit erhöhten Härte- und Zähigkeitswerten bestehen.

7. Spreizdübel nach einem der vorhergehenden Ansprüche, dadurch gekennzeichnet, daß die Abdeckschalen (50) im Bereich des der Aufweitung abgewandten Endes durch einen Federring (54) miteinander verbunden und am Umfang der Spreizlamellen (28) anliegend gehalten sind.

8. Spreizdübel nach Anspruch 7, dadurch gekennzeichnet, daß die Abdeckschalen anstelle oder zusätzlich zu dem Federring (54) an ihren der Aufweitung abgewandten Enden seitlich miteinander verbunden sind.

9. Spreizdübel nach einem der vorhergehenden Ansprüche, dadurch gekennzeichnet, daß die sich über dem Umfang der Spreizhülse zur Aufnahme der Abdeckschalen erstreckende Ausnehmung am rückwärtigen Ende durch eine Ringschulter (62) der Spreizhülse gebildet ist, die einen im Durchmesser größeren zylindrischen Abschnitt der Spreizhülse von dem die Ausnehmung bildenden und nach vorn verjüngten aufweitbaren Abschnitt (18) der Spreizhülse abteilt.

**Claims**

1. Straddling dowel for positive anchoring in a borehole of a stone or concrete wall, which contains a radially widened undercut region, comprising an expanding shell having a section in the region of the front end, wherein longitudinal slots are forming and separating spreading lamellae from each other, which can be expanded in a generally radial direction, and a spreader for being driven into said expanding shell to expand said expandable section, **characterized in** that cover plates (50) are provided on the periphery of the expandable section of the expanding shell (10) and are flexibly connected to one another in the area of their end opposite to the expandable section, and which cover plates each are disposed over a longitudinal slot of the expanding shell between said spreading lamellae, and being of a width such that the longitudinal slot is still covered substantially over its entire width even after expansion.

2. Straddling dowel as in claim 1, characterized in that cover plates (50) are approximately adapted to the curvature of the expanding shell and are disposed in a recess set back radially with respect to the periphery of the shell such that in the unexpanded condition, they remain within the clear outer diameter of the expanding shell.

3. Straddling dowel as in claim 1 or 2, characterized in that the cover plates (50) are aligned with respect to the particular longitudinal slot by in each case at least one projection (58), which is centrally disposed at the end opposite to the region of the expansion, protrudes radially inwards, and in each case engages in a longitudinal slot of the expanding shell.

4. Straddling dowel as claimed in any one of the preceding claims, characterized in that at the expandable end of the expanding shell, each cover plate (50) has at least one lug (52) bent outwardly into about radial direction, which keeps the longitudinal slot (22) closed with respect to the masonry in a region of the lamellae, which adjoins the expanding shell.

5. Straddling dowel as claimed in any one of the preceding claims, characterized in that the cover plates (50) are arranged laterally abutting on the periphery of the expanding shell and have sections in particular connected sections, which extend both in the axial direction and also approximately in the radial direction.

6. Straddling dowel as claimed in any one of the preceding claims, characterized in that the cover plates (50) consist of sheet metal, in particular metallic stamped parts or of plastic having increased hardness and toughness values.

7. Straddling dowel as claimed in any one of the preceding claims, characterized in that, in the region of the end facing away from the expansion, the cover plates (50) are connected to each other and held in contact with the periphery of the spreading lamellae (28) by a spring washer (54).

8. Straddling dowel as claimed in claim 7, characterized in that, in place of or in addition to the spring washer (54), the cover plates are connected to each other laterally at their ends facing away from the expansion.

9. Straddling dowel as claimed in any one of the preceding claims, wherein the recess extending over the periphery of the expanding shell so as to accomodate the cover plates is formed by an annular shoulder (62) of the expanding shell, which divides a larger-diameter cylindrical section of the expanding shell from the expandable section (18), which forms the recess and tapers towards the front.

**Revendications**

1. Cheville à expansion pour l'ancrage à engagement positif dans un trou de forage d'une paroi en pierre ou béton, ledit trou ayant une zone contre dépouillée radialement élargie, comprenant une douille à expansion ayant une section à lames à expansion séparées par des fentes longitudinales et généralement radialement expansible dans la zone de son extrémité antérieur, et un corps d'expansion pouvant être enfoncé dans la douille à expansion pour évaser la section expansible, caractérisée en ce que des plaques de recouvrement (50) sont prévues sur la périphérie de la section expansible de la douille à expansion (10), qui sont reliées de façon mobile à leur extrémité opposée à la section expansible et dont chacune est disposée sur une fente longitudinale de la douille expansible entre les lames à expansion et qui ont une largeur telle que la fente longitudinale reste encore essentiellement couverte sur toute sa largeur, également après l'expansion.

2. Cheville à expansion selon la revendication 1, caractérisée en ce les plaques de recouvrement (50) sont adaptées à peu près à la courbure de la douille à expansion et sont arrangées dans un creux abaissé radialement par rapport à la circonférence de la douille, de sorte qu'à l'état non évasé les plaques restent à l'intérieur du diamètre extérieur libre de la douille à expansion.

3. Cheville à expansion selon la revendication 1 ou 2, caractérisée en ce que les plaques de recouvrement (50) sont alignées par rapport à la fente longitudinale respective au moyen d'au moins un épaulement faisant saillie radialement vers l'intérieur au milieu de l'extrémité opposée à la zone d'expansion et s'engageant dans une fente longitudinale de la douille à expansion.

4. Cheville à expansion selon l'une quelconque des revendications précédentes, caractérisée en ce que chaque plaque de recouvrement (50) comprend à l'extrémité expansible de la douille à expansion au moins une projection (52) pliée à peu près radialement vers l'extérieur qui ferme la fente longitudinale (22) par rapport à la paroi dans une zone des lames suivant la douille à expansion.

5. Cheville à expansion selon l'une quelconque des revendications précédentes, caractérisée en ce que les plaques de recouvrement (50) sont disposées sur la périphérie de la douille à expansion de sorte qu'elles se touchent et comprennent des sections, en particulier des sections interdépendantes, qui s'étendent aussi bien en direction axiale qu'également approximativement en direction radiale.

6. Cheville à expansion selon l'une quelconque des revendications précédentes, caractérisée en ce que les plaques de recouvrement (50) sont formées d'une tôle métallique, en particulier des pièces découpées métalliques, ou en matière synthétique ayant des valeurs élevées de dureté et de ténacité.

7. Douille à expansion selon l'une quelconque des revendications précédentes, caractérisée en ce que les plaques de recouvrement (50) sont interconnectées au moyen d'un jonc élastique dans la zone de leur extrémité opposée à l'évasement et sont retenues contre la périphérie des lames à expansion (28) par ce jonc.

8. Cheville selon la revendication 7, caractérisé en ce que les plaques de recouvrement sont latéralement unies à leur extrémité opposée à l'évasement au lieu ou en supplément à leur union par le jonc élastique (54).

9. Douille à expansion selon l'une quelconque des revendications précédentes, caractérisée en ce que le creux s'étendant sur la circonférence de la douille à expansion pour recevoir les plaques de recouvrement est formé à l'extrémité arrière par un épaulement circulaire (62) de la douille à expansion qui sépare une section cylindrique à diamètre plus grand de: la douille à expansion de la section (18) expansible de la douille à expansion effilée vers l'avant et formant le creux.

Fig.3

Fig. 2

Fig. 1

8